(19) Europäisches Patentamt
European Patent Office
Office européen des brevets

(11) **EP 0 744 418 B1**

(12) **EUROPÄISCHE PATENTSCHRIFT**

(45) Veröffentlichungstag und Bekanntmachung des Hinweises auf die Patenterteilung:
**21.03.2001 Patentblatt 2001/12**

(51) Int Cl.[7]: **C08F 236/04**, C08L 9/10, C08J 9/00, C08F 220/12, C08J 9/30

(21) Anmeldenummer: **96107842.5**

(22) Anmeldetag: **17.05.1996**

(54) **Latex-Schaumgummi**

Latex foam rubber

Caoutchuk en mousse de latex

(84) Benannte Vertragsstaaten:
**AT BE CH DE DK FR GB IT LI NL SE**

(30) Priorität: **26.05.1995 DE 19519340**

(43) Veröffentlichungstag der Anmeldung:
**27.11.1996 Patentblatt 1996/48**

(73) Patentinhaber: **BASF AKTIENGESELLSCHAFT**
**67056 Ludwigshafen (DE)**

(72) Erfinder:
• **Balk, Roelof, Dr.**
**67459 Böhl-Iggelheim (DE)**
• **Claassen, Peter**
**67063 Ludwigshafen (DE)**
• **Graalmann, Onno, Dr.**
**69221 Dossenheim (DE)**
• **Van de Meulen, Leonardus**
**67373 Dudenhofen (DE)**
• **Visseren, Marinus**
**6905 AD Zevenaar (NL)**

(56) Entgegenhaltungen:
EP-A- 0 048 950      DE-A- 2 117 441
GB-A- 611 164

• DATABASE WPI Section Ch, Week 9416 Derwent Publications Ltd., London, GB; Class A12, AN 94-128905 XP002044685 & JP 06 073 220 A (NIPPON ZEON KK) , 15.März 1994

**Beschreibung**

Vorliegende Erfindung betrifft Latex-Schaumgummi, deren Polymerisat in radikalisch polymerisierter Form aus

a) wenigstens 50 Gew.-% wenigstens eines Monomeren aus der Gruppe umfassend Butadien und Isopren (Monomere a),

b) wenigstens 10 Gew.-% wenigstens eines Monomeren aus der Gruppe umfassend Ester aus Acrylsäure oder Methacrylsäure und einem 1 bis 8 C-Atome aufweisenden Alkanol (Monomere b) und

c) 0 bis 10 Gew.-% sonstigen radikalisch copolymerisierbaren, wenigstens eine ethylenisch ungesättigte Gruppe aufweisenden, Monomeren (Monomere c)

mit der Maßgabe aufgebaut ist, daß die Gesamtmenge der in radikalisch polymerisierter Form einpolymerisiert enthaltenen Monomeren a) und b) wenigstens 90 Gew.-% beträgt, wobei die Angaben in Gew.-% auf die Gesamtmenge der in das Polymerisat einpolymerisierten Monomeren a) + b) + c) bezogen sind und die, bezogen auf das Gewicht des Polymerisats, 35 bis 55 Gew.-% wenigstens eines Hydrats eines anorganischen Salzes enthalten.

Wäßrige Polymerisatdispersionen (Latices) sind allgemein bekannt. Es handelt sich um fluide Systeme, die als disperse Phase in wäßrigem Dispergiermedium aus mehreren ineinander verschlungenen Polymerisatketten bestehende Polymerisatknäuel (sogenannte Polymerisatteilchen) in disperser Verteilung befindlich enthalten. Der Durchmesser der Polymerisatteilchen liegt im allgemeinen hauptsächlich im Bereich von 0,01 bis 5 µm, häufig hauptsächlich im Bereich von 0,01 bis 1 µm. Der Zustand der dispersen Verteilung der Polymerisatpartikel ist in der Regel thermodynamisch nicht stabil. D.h., das System strebt danach, die Grenzfläche "dispergierte Polymerisatpartikel/wäßriges Dispergiermedium" dadurch zu verkleinern, daß sich mehrere Polymerisatteilchen zu größeren Polymerisateinheiten (Koagulat) vereinigen.

Mit Hilfe von Dispergiermitteln (z.B. Schutzkolloiden und/oder Emulgatoren) läßt sich die Stabilität der dispersen Verteilung der Polymerisatteilchen oft über einen Zeitraum von $\geq$ 1 Monat, vielfach sogar über einen Zeitraum von $\geq$ 3 Monaten oder $\geq$ 6 Monaten aufrechterhalten (vgl. z.B. F. Hölscher, Dispersionen synthetischer Hochpolymerer, Teil I, Springer-Verlag, New York (1969)).

Es ist weiterhin allgemein bekannt, daß aus wäßrigen Polymerisatdispersionen Schaumgummi z.B. dadurch erhältlich ist, daß man die wäßrige Polymerisatdispersion durch Begasen aufschäumt, den Schaum formt, durch gezielte Desaktivierung der die wäßrige Polymerisatdispersion stabilisierenden Dispergiermittel die Polymerisatpartikel im Schaum kontrolliert partiell koaguliert, dadurch den Schaum geliert, anschließend die die Polymerisatpartikel bildenden polymeren Ketten zur Erzeugung von Elastizität intermolekular vernetzt und schließlich das so erzeugte Schaumgummi wäscht und trocknet (Einzelheiten finden sich z.B. in Latex foam rubber, E.W. Madge, Maclaren & Sons Ltd., London, Interscience Publishers, J. Wiley & Sons, New York (1962) oder in der EP-A 377 808).

Von den zur Herstellung von Latex-Schaumgummi (der im Gegensatz zu Polyurethanschaumgummi einen offenporigen Schaumstoff bildet, d,h, die Zellen stehen untereinander in Kontakt) verwendeten synthetischen wäßrigen Polymerisatdispersionen besitzen diejenigen, deren dispergiertes Polymerisat aus Butadien und Styrol in radikalisch polymerisierter Form aufgebaut ist, die mit Abstand größte Bedeutung (vgl. z.B. Reinhard, Dispersionen synthetischer i Hochpolymerer, Teil II, Anwendung, Springer-Verlag, Berlin (1969), S. 230, Zeilen 18/19).

Dies ist ursächlich insbesondere darauf zurückzuführen, daß wäßrige Butadien/Styrol-Polymerisatdispersionen nach der Methode der radikalischen wäßrigen Emulsionspolymerisation einerseits in einfacher Weise zugänglich sind und die dabei resultierenden Polymerisate andererseits durch Vulkanisation mittels Schwefel leicht intermolekular vernetzt werden können, wodurch schließlich Schaumgummi erhalten wird, dessen physikalische Eigenschaften zu befriedigen vermögen. Einen wesentlichen Anteil am Verbrauch von Butadien/Styrol-Schaumgummi hat dessen Verwendung als Polstermaterial in der Automobil- und Möbelindustrie. Außerdem werden aus derartigem Schaumgummi Kissenfüllungen und Matratzen hergestellt. Die diesbezüglich wichtigsten physikalischen Kenndaten (bezogen auf 23°C und 1 atm) eines Schaumgummi sind dessen Massendichte (sie sollte, ermittelt nach ISO 845, 80 bis 200 kg/m$^3$ betragen), seine Reißdehnung (sie sollte, ermittelt nach ISO 1798, $\geq$ 180 % betragen), seine Zugfestigkeit oder Reißkraft (sie sollte, ermittelt nach ISO 1798, $\geq$ 70 kPa betragen) sowie seine Eindruckhärte (sie sollte, ermittelt nach ISO 2439, A, $\leq$ 350 N betragen).

Problematisch an Butadien/Styrol-Schaumgummi ist jedoch, insbesondere bezüglich der vorgenannten Verwendungen, daß er, wie die meisten Kunststoffe, wenn sie keine geeigneten Zusätze enthalten, leicht entzündbar ist.

Nun sind zwar zahlreiche solche als Flammschutzmittel bezeichneten Zusätze für Kunststoffe bekannt, doch müssen diese, sowohl was ihre chemische Eigenart als auch insbesondere ihre erforderliche Einsatzmenge anbetrifft, auch mit dem von dem Kunststoff geforderten übrigen Eigenschaftsprofil verträglich sein.

Gemäß Ullmanns Encyklopädie der technischen Chemie, Bd. 15, Verlag Chemie, Weinheim, 4. Auflage (1978) S. 271 ff, lassen sich im wesentlichen drei Klassen von für Kunststoffe geeigneten flammhemmenden Zusatzstoffen gegeneinander abgrenzen:

a) halogenierte organische Verbindungen;
b) spezielle anorganische Verbindungen;
c) phosphorhaltige organische Verbindungen;

Erstere sind zunehmend unerwünscht, da sie im Brandfall zur Bildung toxikologisch bedenklicher halogenorganischer Verbindungen führen können (die GB-1095973 und die GB-1156298 beschreiben z.B. den Zusatz von Homo- und/oder Copolymerisaten von Vinylhalogeniden im Rahmen der Herstellung von eine reduzierte Entzündbarkeit aufweisendem Latex-Schaumgummi). Zu letzteren gehören vor allem Phosphonate, Phosphite und Phosphate wie z.B. Tri-kresylphosphat, die insofern von Nachteil sind, als sie größtenteils Weichmachercharakter aufweisen und daher in der Regel die gewünschten physikalischen Eigenschaften des Schaumgummi beeinträchtigen.

Bei den anorganischen Verbindungen handelt es sich im wesentlichen um Hydrate anorganischer Salze wie Zinkborathydrat (z.B. $Zn(BO_2)_2 \cdot 2H_2O$ bzw. $2\ ZnO(B_2O_3)_3 \cdot (H_2O)_{3,5}$), Metalloxidhydrate wie Kaoline (z.B. $Al_2O_3 \cdot 2SiO_2 \cdot 2H_2O$), Metallhydroxide wie $Al(OH)_3$ oder gemischte Formen der letzten beiden (Metalloxidhydroxide). Die Metallhydroxide unterscheiden sich dabei von Metalloxidhydraten dadurch, daß sie das Wasser in Form von OH-Gruppen gebunden enthalten. Im allgemeinen Sprachgebrauch wird zwischen den beiden Typen allerdings häufig nicht streng unterschieden. D.h., oft werden Metallhydroxide als Metalloxidhydrate bezeichnet und umgekehrt (so wird Aluminiumtrihydroxid häufig auch als Aluminiumoxidhydrat ($Al_2O_3 \cdot 3H_2O$) oder als Tonerdehydrat bezeichnet). Diese Unsicherheit in der Verwendung der beiden Begriffe bringt zum Ausdruck, daß der Nachweis der Art der Wasserbindung häufig nicht zu erbringen ist.

Ihre flammhemmende Wirkung beruht lediglich auf der Abspaltung des Hydratwassers, weshalb sie, im Unterschied zum Blähglimmer der DE-A 1940385, unter Beibehalt des Hydratwassers eingearbeitet und bei alleiniger Anwendung üblicherweise in Mengen angewendet werden müssen, die eine unerwünschte Versteifung des Schaumgummi bedingen. Ansonsten kommen als anorganische Flammschutzmittel noch Antimontrioxid und dessen äquivalente Arsenverbindungen in Betracht, die jedoch meist nur im Beisein von halogenhaltigen organischen Zusätzen eine effiziente flammhemmende Wirkung entfalten, die vermutlich auf der Bildung von Verbindungen wie Antimonoxychloriden als aktiven Inhibitoren beruht. Die toxischen Eigenschaften von Antimon und Arsen sind hinlänglich bekannt.

Um bei Schaumgummi auf der Basis von wäßrigen Butadien/Styrol-Polymerisatdispersionen neben den gewünschten physikalischen Eigenschaften gleichzeitig eine normengerechte (z.B. gemäß DIN EN 597, Teil 1 und Teil 2, Entwurf vom Februar 1992) reduzierte Entzündbarkeit verwirklichen zu können, werden daher in der Praxis stets mehrere der vorstehend aufgeführten Flammschutzmittel gleichzeitig zur Anwendung gebracht, um so die Nachteile des einzelnen Flammschutzmittels möglichst gering zu halten. Diese Lösung vermag jedoch nicht vollständig zu befriedigen. In jüngerer Zeit erschienen in diesem Zusammenhang in England Berichte, die das Sudden Infant Death Syndrom (SIDS) mit der Ausrüstung von Baby-Matratzen mit Flammschutzmitteln in Zusammenhang brachten (vgl. z. B. Karlsruher Kind, Gesundheit, Ausgabe 3, März 1995, Seite 9).

Die Aufgabe der vorliegenden Erfindung bestand daher darin, Latex-Schaumgummi zur Verfügung zu stellen, die bereits bei Zusatz von Hydraten anorganischer Salze als alleinigem Flammschutzmittel eine normengerechte Flammwidrigkeit bedingen, ohne daß die anzuwendende Menge an anorganischem Salzhydrat das geforderte physikalische Eigenschaftsprofil des Latex-Schaumgummi in unzulänglicher weise beeinträchtigt.

Demgemäß wurden die eingangs definierten Latex-Schaumgummi gefunden.

Die prinzipielle Verwendbarkeit wäßriger Butadien/Comonomer-Polymerisatdispersionen mit von Styrol verschiedenen Comonomeren für die Herstellung von Latex-Schaumgummi ist aus der US-3 542 700, der DE-A 21 17 441, der EP-A 48,950, der GB-A 611 164 und aus der EP-A 407 059 bekannt.

Vorzugsweise ist Butadien das alleinige Monomere a). D.h., mit Vorteil ist das Polymerisat des erfindungsgemäßen Latex-Schaumgummis in radikalisch polymerisierter Form aus

a) wenigstens 50 Gew.-% Butadien (Monomeres a),
b) wenigstens 10 Gew.-% wenigstens eines Monomeren aus der Gruppe umfassend Ester aus Acrylsäure oder Methacrylsäure und einem 1 bis 8 C-Atome aufweisenden Alkanol (Monomere b) und
c) 0 bis 10 Gew.-% sonstigen radikalisch copolymerisierbaren, wenigstens eine ethylenisch ungesättigte Gruppe aufweisenden, Monomeren (Monomere c)

mit der Maßgabe aufgebaut, daß die Gesamtmenge der in radikalisch polymerisierter Form einpolymerisiert enthaltenen Monomeren a) und b) wenigstens 90 Gew.-% beträgt, wobei die Angaben in Gew.-% jeweils auf die Gesamtmenge der in das Polymerisat einpolymerisierten Monomeren a) + b) + c) bezogen sind.

Die Monomeren b) werden generell bevorzugt aus der Gruppe umfassend n-Butylacrylat, 2-Ethylhexylacrylat, Methylacrylat, Ethylacrylat, Methylmethacrylat und iso-Butylmethacrylat ausgewählt. Mit Vorteil beträgt der Anteil der Monomeren b) wenigstens 20 Gew.-%.

Besonders bevorzugt ist Methylmethacrylat das alleinige Monomere b). Als Monomere c) werden vorzugsweise nur monoethylenisch ungesättigte Monomere verwendet. Als solche eignen sich z.B. Acrylsäure, Methacrylsäure, Acrylnitril, Methacrylnitril, Acrylamid, Methacrylamid und Styrol. Mit Vorteil enthält das Polymerisat höchstens 5 Gew.-% an Monomeren c) einpolymerisiert. Bevorzugt enthalten die Monomeren c) weder Halogen, noch Phosphor, noch Arsen, noch Antimon oder ein Schwermetall. Mit besonderem Vorteil enthält das Polymerisat keine Monomeren c) einpolymerisiert.

D.h., günstig sind Polymerisate, die in radikalisch polymerisierter Form aus

> 50 bis 90, bevorzugt 60 bis 80, Gew.-% Monomeren a) und
> 10 bis 50, bevorzugt 20 bis 40, Gew.-% Monomeren b)

aufgebaut sind.

Unter diesen sind wiederum jene besonders günstig, deren Polymerisat in radikalisch polymerisierter Form aus

> 50 bis 90, bevorzugt 60 bis 80, Gew.-% Butadien und
> 10 bis 50, bevorzugt 20 bis 40, Gew.-% Methylmethacrylat

aufgebaut ist.

Die Herstellung der erfindungsgemäß verwendeten wäßrigen Polymerisatdispersionen kann in an sich bekannter Weise nach der Methode der radikalischen wäßrigen Emulsionspolymerisation erfolgen. D.h., das Polymerisat wird aus den wenigstens eine ethylenisch ungesättigte Gruppe aufweisenden Monomeren im Beisein von Dispergiermitteln und radikalischen Polymerisationsinitiatoren unmittelbar im wäßrigen Medium in disperser Verteilung befindlich erzeugt.

Diese Polymerisationsweise ist vielfach vorbeschrieben und dem Fachmann daher hinreichend bekannt (vgl. z.B. Encyclopedia of Polymer Science and Engineering, Vol. 8, S. 659 ff (1987); D.C. Blackly, in High Polymer Latices, Vol. 1, S. 35 ff (1966); H. Warson, The Applications of Synthetic Resin Emulsions, Seite 246 ff, Kapitel 5 (1972); D. Diederich, Chemie in unserer Zeit 24, S. 135 bis 142 (1990); Emulsion Polymerization, Interscience Publishers, New York (1965); DE-A 40 03 422 und Dispersionen synthetischer Hochpolymerer, Teil I, F. Hölscher, Springer Verlag, Berlin (1969)).

Zur Gewährleistung der Stabilität der erfindungsgemäß verwendeten wäßrigen Polymerisatdispersion kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate, Vinylpyrrolidon enthaltende Copolymerisate oder Polykondensate aus Naphthalinsulfonsäure und Formaldehyd, deren zahlenmittleres, auf atomaren Wasserstoff bezogenes, relatives Molekulargewicht mit Vorteil 4000 bis 8000 beträgt. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Da die Monomeren b) der erfindungsgemäßen wäßrigen Polymerisatdispersionen infolge ihrer Polarität im Unterschied zu den Monomeren a) bereits eine signifikante Löslichkeit im wäßrigen Polymerisationsmedium aufweisen, wird eine Kombination aus Emulgatoren und Schutzkolloiden dann bevorzugt angewendet, wenn erfindungsgemäße wäßrige Polymerisatdispersionen angestrebt werden, deren dispergierte Polymerisatpartikel chemisch einheitlich sind. Erfindungsgemäße wäßrige Polymerisatdispersionen mit chemisch einheitlichen Polymerisatpartikeln sind bevorzugt. Von chemisch einheitlichen Polymerisatpartikeln spricht man dann, wenn die Massendichte $\varrho$ aller Polymerisatteilchen im wesentlichen die selbe ist, d.h., wenn die Massendichten von wenigstens 95 Gew.-% aller Polymerisatteilchen in einem Intervall $\varrho = \varrho_o \pm 2\%$ liegen.

Als Emulgatoren, die im Unterschied zu den Schutzkolloiden als grenzflächenaktive Substanzen Micellen zu bilden vermögen, werden mit Vorteil solche eingesetzt, deren reaktive Molekulargewichte im Unterschied zu den Schutzkolloiden üblicherweise unter 2000, vorzugsweise unter 1000 liegen. Sie können sowohl anionischer, kationischer als auch nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di-und Tri-Alkylphenole (EO-Grad: 3 bis 100, Alkylrest: $C_4$ bis $C_{12}$), ethoxylierte Fettalkohole (EO-Grad: 3 bis 100,

Alkylrest: $C_8$ bis $C_{18}$), sowie Alkali- und Ammoniumsalze von Alkylsulfaten (Alkylrest: $C_8$ bis $C_{16}$), von Schwefelsäurehalbestern ethoxylierter Alkanole (EO-Grad: 1 bis 70, Alkylrest: $C_{12}$ bis $C_{18}$) und ethoxylierter Alkylphenole (EO-Grad: 3 bis 100, Alkylrest: C4 bis $C_{12}$), von Alkylsulfonsäuren (Alkylrest: $C_{12}$ bis $C_{18}$), von Arylsulfonsäuren und von Alkylarylsulfonsäuren (Alkylrest: $C_9$ bis $C_{18}$). Ferner sind geeignete Emulgatoren die Alkali- und Ammoniumsalze von Alkylsulfaten (Alkylrest: $C_{10}$ bis $C_{18}$) und von Aryl- sowie Alkylarylsulfaten (Alkylrest: $C_9$ bis $C_{18}$). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.

Da das Grundprinzip der beiden wichtigsten Verfahren zur Latex-Schaumgummiherstellung - des Dunlop- und des Talalay-Prozesses - darin besteht, daß eine bei einem pH-Wert >7 stabile, geschäumte wäßrige Polymerisatdispersion durch Erniedrigen des pH-Wertes zum Gelieren gebracht wird, bilden die Alkali (insbesondere Natrium-und Kalium-)- und Ammoniumsalze von $C_8$- bis $C_{18}$-Fettsäuren (gesättigte und ungesättigte) sowie von disproportionierten Harzsäuren aus Kolophonium (Dresinate) besonders bevorzugte Emulgatoren zur Stabilisierung der erfindungsgemäß verwendeten wäßrigen Polymerisatdispersionen. Unter diesen sind die Kalium-, Natrium-und Ammoniumsalze der Palmitinsäure, Ölsäure, Stearinsäure, Linolsäure und Linolensäure besonders bevorzugt. Generell ist eine anionische Stabilisierung bevorzugt.

In der Regel enthalten die erfindungsgemäß verwendeten wäßrigen Polymerisatdispersionen, bezogen auf die Menge an dispergiertem Polymerisat, 0,5 bis 10, vorzugsweise 1 bis 5 Gew.-% an Dispergiermittel. Mit Vorteil besteht die Gesamtmenge an Dispergiermittel der erfindungsgemäß verwendeten wäßrigen Polymerisatdispersionen zu wenigstens 50 Gew.-% und besonders bevorzugt zu wenigstens 75 Gew.-% aus Alkali- und/oder Ammoniumsalzen von $C_8$- bis $C_{18}$-Fettsäuren. Mit ganz besonderem Vorteil besteht die Gesamtmenge an Dispergiermittel der erfindungsgemäß verwendeten wäßrigen Polymerisatdispersionen zu wenigstens 50 Gew.-% und besonders bevorzugt zu wenigstens 75 Gew.-% aus Alkali- und/oder Ammoniumsalz der Ölsäure. In besonders günstiger Weise ist das Dispergiermittel der erfindungsgemäß verwendeten wäßrigen Polymerisatdispersionen eine Kombination aus wenigstens einem Schutzkolloid und wenigstens einem der vorgenannten Salze einer $C_8$- bis $C_{18}$-Fettsäure.

Als radikalische Polymerisationsinitiatoren kommen für die radikalische wäßrige Emulsionspolymerisation zur Herstellung der erfindungsgemäß verwendeten wäßrigen Polymerisatdispersionen prinzipiell alle diejenigen in Betracht, die in der Lage sind, eine radikalische wäßrige Emulsionspolymerisation auszulösen. Es kann sich dabei sowohl um Peroxide als auch um Azoverbindungen handeln. Besonders geeignete Peroxide sind Wasserstoffperoxid, tert.-Butylhydroperoxid, Diisopropylbenzolhydroperoxid, Para-Menthanhydroperoxid, Cumolhydroperoxid und Peroxodischwefelsäure sowie deren Salze. Vorzugsweise werden kombinierte Systeme, die aus wenigstens einem Reduktionsmittel und wenigstens einem Peroxid und/oder Hydroperoxid zusammengesezt sind, eingesetzt, da die Reduktionsmittel die Radikalbildung aktivieren und so eine Durchführung der radikalischen wäßrigen Emulsionspolymerisation bei tieferen Temperaturen ermöglichen.

Als geeignete Reduktionsmittel kommen beispielsweise Ascorbinsäure, Acetonbisulfit, das Natriumsalz der Hydroxymethansulfinsäure, Natriumsulfit, Natriumhydrogensulfit oder Natriumdithionit in Betracht. Ganz besonders bevorzugt umfassen die vorgenannten kombinierten (Redoxinitiator-)Systeme zusätzlich eine geringe Menge einer im Polymerisationsmedium löslichen Metallverbindung, deren metallische Komponente in mehreren Wertigkeitsstufen auftreten kann. Ein Beispiel für solche Metallverbindungen sind Eisen(II)salze wie Eisen(II)sulfat. Anstelle eines wasserlöslichen Eisen(II)-salzes wird häufig auch eine Kombination aus wasserlöslichen Fe/V-Salzen benutzt. Derartige, eine solche Metallverbindung enthaltende, Redoxinitiatorsysteme sind insofern von Vorteil, als sie die Durchführung der radikalischen wäßrigen Emulsionspolymerisation bei noch tieferen Temperaturen ermöglichen. Beispiele für derartige Redoxinitiatorsysteme sind Ascorbinsäure/Eisen(II)sulfat/Wasserstoffperoxid oder Natriumdithionit + Natriumformaldehydsulfoxylat/Eisen(II)sulfat/Para-Menthanhydroperoxid oder Diisopropylbenzolhydroperoxid. Häufig wird derartigen, eine Metallverbindung enthaltenden Redoxinitiatorsystemen noch eine geringe Menge eines Chelatbildners zugesetzt, um zu gewährleisten, daß sich die metallische Komponente in Lösung befindet und dem Reaktionssystem nicht z.B. durch eine Fällungsreaktion entzogen wird. Als Beispiel für einen solchen Chelatbildner sei das Natriumsalz der Ethylendiamintetraessigsäure genannt. Häufig wird die metallische Komponente bereits unmittelbar als Chelatkomplex zugesetzt.

Bezogen auf die zu polymerisierenden Monomeren beträgt die zu verwendende Initiatormenge in der Regel 0,01 bis 5 Gew.-%.

Die Polymerisationstemperatur T beträgt mit Vorteil $-10°C < T < 70°C$. Da Butadien zwei ethylenisch ungesättigte Gruppen aufweist, kann es bereits im Verlauf der radikalischen wäßrigen Emulsionspolymerisation zu Vernetzungsreaktionen (chemische Bindung zwischen wenigstens zwei voneinander verschiedenen Polymerketten), von insbesondere dreidimensionaler Ausprägung, kommen. Hohe Polymerisationstemperaturen fördern derartige dreidimensionale Vernetzungsreaktionen. Erfindungsgemäß bevorzugt sind solche Polymerisate, die überwiegend aus nicht vernetzten langen Polymerisatketten bestehen und die allenfalls einen geringen Verzweigungsgrad aufweisen. Ein solcher geringer Vernetzungsgrad weist sich in den physikalischen Eigenschaften der Verfilmungen der wäßrigen Polymerisatdispersionen aus.

Ein weiteres Maß zur Charakterisierung des Polymerisats ist dessen sogenannter "unlöslicher Anteil". Zur Bestimmung des unlöslichen Anteils isoliert man das Emulsionspolymerisat in an sich bekannter Weise durch Koagulation (z.B. pH-Erniedrigung und Zusatz von Isopropanol).

Anschließend gibt man 0,3 g des Koagulats bei 25°C und 1 atm in 100 ml Toluol und rührt 20 h. Danach wird der ungelöste Anteil abfiltriert und zur eingewogenen Menge an Polymerisat ins Verhältnis gesetzt. Ausgedrückt in Gew.-% ergibt dies den "unlöslichen Anteil". In der Regel beträgt der "unlösliche Anteil" 60 bis 70 Gew.-%.

Eine in oben erwähnter Hinsicht besonders signifikante physikalische Eigenschaft der Verfilmungen der erfindungsgemäß verwendeten wäßrigen Polymerisatdispersionen ist der im Rahmen einer temperaturabhängigen dynamisch-mechanischen-Analyse im Temperaturbereich von -15 bis +175°C resultierende Maximalwert für $\tan \delta$, der sogenannte $\tan \delta_{max}$-Wert, gemessen mit einem Meßgerät MkII DMTA der Fa. Polymer Laboratories (Loughborough, England) im "shear-modus" bei einer Frequenz von 1 Hz und einer Aufheizgeschwindigkeit von 4°C/min (die Verfilmung wird dabei oberhalb der Mindestfilmbildetemperatur (häufig bei 25°C) und bei 1 atm Druck durchgeführt; anschließend wird der Film im Exsikkator bei reduziertem Druck über Trockenmittel bei 25°C 10 bis 30 h getrocknet; nach beendeter Trocknung wird die DMTA-Messung durchgeführt; die Filmdicke beträgt normalerweise 0,5 mm, als Filmprobe wird normalerweise eine Kreisfläche mit einem Durchmesser von 11 mm eingesetzt; der Film muß blasenfrei sein). In der Regel beträgt $\tan \delta_{max} \geq 0,2$ bis $\leq 0,5$ oder $\geq 0,25$ bis $< 0,35$. Die Größe $\tan \delta$ steht dabei für das Verhältnis von "Verlustmodul/Elastizitätsmodul" = E''/E'.

D.h., von besonderem Vorteil sind somit erfindungsgemäß verwendete wäßrige Polymerisatdispersionen, deren dispergiertes Polymerisat einen unlöslichen Anteil von 60 bis 70 Gew.-% und deren Verfilmung gleichzeitig einen $\tan \delta_{max}$-Wert von $\geq 0,2$ bis $\leq 0,5$ bzw. $\geq 0,25$ bis $\leq 0,35$ aufweisen.

In entsprechender Weise beträgt die Polymerisationstemperatur mit Vorteil -10 bis 50°C, bevorzugt -10 bis 30°C, besonders bevorzugt 0 bis 20°C und ganz besonders bevorzugt 10 bis 20°C.

Eine weitere Maßnahme zur Begrenzung des Vernetzungsgrades ist der Zusatz von sogenannten Molekulargewichtsreglern (Kettenüberträger) wie z.B. Mercaptanen (Alkanthiolen), die mit Vorteil 3 bis 15 C-Atome aufweisen. Vorzugsweise wird tert.-Dodecylmercaptan oder n-Dodecylmercaptan als Molekulargewichtsregler eingesetzt. In typischer Weise werden die das Molekulargewicht regelnden Substanzen, bezogen auf die Gesamtmenge der zu polymerisierenden Monomeren, in Mengen von 0,01 bis 3 Gew.-% eingesetzt. Üblicherweise beträgt der Arbeitsdruck bei der radikalischen wäßrigen Emulsionspolymerisation 1 bis 15, bevorzugt 1 bis 6 und besonders bevorzugt 1 bis 3 atm.

Bevorzugt erfolgt die Herstellung von Latex-Schaumgummi ausgehend von wäßrigen Polymerisatdispersionen, deren Polymerisatvolumenanteil (das Polymerisatvolumen bezogen auf das Gesamtvolumen der wäßrigen Polymerisatdispersion) $\geq 50$ Vol.-%, bevorzugt 60 bis 70 Vol.-%, beträgt, da die Gelierung bei Latexschäumen, die ausgehend von solchen wäßrigen Polymerisatdispersionen erzeugt wurden, in besonders einfacher Weise erfolgt (vgl. Plaste und Kautschuk, 24. Jahrgang, Heft 5, 1977, S. 346). Von Nachteil an solchermaßen konzentrierten wäßrigen Polymerisatdispersionen ist jedoch z.B. deren erhöhter Fließwiderstand. Andererseits zeigen grobteilige wäßrige Polymerisatdispersionen unter der Prämisse gleichen Feststoffgehalts einen geringeren Fließwiderstand als feinteilige wäßrige Polymerisatdispersionen. Ferner ist der Fließwiderstand von solchen wäßrigen Polymerisatdispersionen, deren Polymerisatteilchendurchmesserverteilung mehr als ein Maximum aufweist (polymodale wäßrige Polymerisatdispersion), in der Regel geringer als von monomodalen wäßrigen Polymerisatdispersionen.

Bevorzugt werden daher solche wäßrigen Polymerisatdispersionen verwendet, deren Polymerisatvolumenanteil 50 bis 70 Vol.-% (Vol.-% Angaben beziehen sich in dieser Schrift auf 25°C und 1 atm) und deren gewichtsmittlerer Polymerisatteilchendurchmesser >300 nm, vorzugsweise 350 bis 550 nm beträgt. Ferner weist die Häufigkeitsverteilung der Polymerisatteilchendurchmesser gleichzeitig vorzugsweise zwei Maxima auf, d.h., sie ist mit Vorteil bimodal. Die Lage des ersten Maximum liegt bevorzugt im Durchmesserbereich 50 bis 100 nm, während die Lage des zweiten Maximum bevorzugt im Bereich von 400 bis 800 nm und ganz besonders bevorzugt im Bereich von 450 bis 650 nm liegt. Ferner ist es günstig, wenn die Halbwertsbreite des ersten Maximum 20 bis 100 nm, bevorzugt 30 bis 50 nm beträgt und die Halbwertsbreite des zweiten Maximum oberhalb von 500 nm, bevorzugt bei 500 bis 1500 nm, besonders bevorzugt bei 800 bis 1200 nm liegt sowie wenn beide Maxima jeweils 40-60 Gew.-% der Polymerisatteilchen umfassen. In der Regel enthält die erfindungsgemäß verwendete wäßrige Polymerisatdispersion keine Polymerisatteilchen mit einem Durchmesser oberhalb von 2500 nm. Auch ist es günstig, wenn das Verhältnis von gewichtsmittlerem zu zahlenmittlerem Polymerisatteilchendurchmesser 1,5 bis 2,5 beträgt.

Aufgrund der Reaktionsträgheit des Butadiens werden ebenda beschriebene wäßrige Polymerisatdispersionen zweckmäßigerweise nicht unmittelbar durch radikalische wäßrige Emulsionspolymerisation hergestellt.

Vielmehr wird durch die radikalische wäßrige Emulsionspolymerisation zunächst eine feinteilige, in der Regel monomodale, wäßrige Ausgangspolymerisatdispersion erzeugt, deren gewichtsmittlerer Teilchendurchmesser 50 bis 80 nm und deren Polymerisatvolumenanteil 15 bis 45, vorzugsweise 25 bis 45 Vol.-% beträgt.

Diese feinteilige wäßrige Ausgangspolymerisatdispersion wird anschließend in an sich bekannter Weise mit Hilfe von Agglomerationsverfahren einer irreversiblen Teilchenvergrößerung unterworfen. Mögliche, in bekannter Weise anzuwendende, Agglomerationsverfahren sind z.B. die Gefrieragglomeration, die Druckagglomeration oder die chemische Agglomeration. Daran schließt sich eine Aufkonzentrierung der wäßrigen Polymerisatdispersion auf die gewünschte Polymerisatvolumenkonzentration an. Als Verfahren zur Latexaufkonzentrierung kommen dabei in an sich bekannter Weise z.B. das Eindampfen, das Aufrahmen, das Zentrifugieren oder das Elketrodekantieren in Betracht.

Mit Vorteil wird die radikalische wäßrige Emulsionspolymerisation zur Erzeugung der erfindungsgemäß verwendeten wäßrigen Ausgangspolymerisatdispersion so durchgeführt, daß man die Gesamtmenge des Polymerisationsansatzes (einschließlich des Molekulargewichtsreglers) abzüglich des Radikalbildners ins Polymerisationsgefäß vorlegt, auf die Polymerisationstemperatur erhitzt und anschließend (in der Regel auf einmal) Radikalbildner ins Polymerisationsgefäß zusetzt und polymerisiert. Dabei kann die Polymerisationstemperatur konstant gehalten werden. Mit Vorteil beträgt die Polymerisationstemperatur jedoch bis zum Erreichen eines Polymerisationsumsatzes von 40 bis 50 Gew.-%, bezogen auf die Gesamtmenge der zu polymerisierenden Monomeren, 5 bis 10°C. Anschließend beträgt die Polymerisationstemperatur mit Vorteil bis zum Erreichen eines Polymerisationsumsatzes von 60 Gew.-% >10 bis 15°C und danach wird die Polymerisationstemperatur bevorzugt auf >15 bis 20°C erhöht und bei dieser Temperatur belassen, bis der Polymerisationsendumsatz erreicht ist. Dieser beträgt ganz generell in der Regel > 60, vorzugsweise >80, mit Vorteil >85, bevorzugt >90, besonders bevorzugt >95 und ganz besonders bevorzugt >98 Gew.-%, bezogen auf die zu polymerisierenden Monomeren. Anschließend wird die radikalische wäßrige Emulsionspolymerisation durch Zusatz von Polymerisationsinhibitoren wie Diethylhydroxylamin gestoppt und nicht umgesetzte Monomere in an sich bekannter Weise durch Desodorieren (vorzugsweise Strippen und/oder Wasserdampfdestillation) entfernt. Während der Polymerisation kann selbstverständlich zum Zweck des Erreichens des gewünschten Polymerisationsumsatzes sowie zum Zwecke der zusätzlichen Stabilisierung der wäßrigen Polymerisatdispersion weiterer Radikalbildner und/oder Dispergiermittel zugesetzt werden. Ferner können zur Stabilisierung des pH-Wertes des wäßrigen Dispergiermediums während der Emulsionspolymerisation Puffer wie Alkaliphosphat zugesetzt werden. Ein Zusatz geringer Mengen starker Elektrolyte wie Kaliumsulfat, Kaliumchlorid und/oder Natriumsulfat erleichtert in an sich bekannter Weise die Einstellung der gewünschten Polymerisatteilchendurchmesser. Im übrigen wird der Polymerisatteilchendurchmesser hauptsächlich durch die Menge des verwendeten Dispergiermittels bestimmt. In der Regel gehen mit zunehmender Dispergiermittelmenge abnehmende Polymerisatteilchendurchmesser einher.

Zusammenfassend erfolgt die Herstellung der erfindungsgemäß verwendeten wäßrigen Polymerisatdispersionen im wesentlichen in entsprechender Weise wie die Herstellung wäßriger Butadien/Styrol-Polymerisatdispersionen. D.h., die Durchführung der radikalischen wäßrigen Emulsionspolymerisation kann als batch-Prozeß auch nach dem Zulaufverfahren oder auch kontinuierlich in Kaskadenfahrweise durchgeführt werden.

Desgleichen gilt für die Herstellung von Latex-Schaumgummi aus den erfindungsgemäß verwendeten wäßrigen Polymerisatdispersionen.

D.h., es können die beiden wichtigsten Verfahren zur Schaumgummiherstellung, nämlich der Dunlop- und der Talalay-Prozeß, angewendet werden. Das Grundprinzip beider Prozesse besteht darin, daß ein bei einem pH-Wert >7 erzeugter Latexschaum durch Erniedrigung des pH-Wertes zum Gelieren gebracht und dadurch fixiert wird. Die auf das Gelieren folgende Vernetzung zur Erzeugung der erforderlichen Elastizität erfolgt zweckmäßigerweise mittels feinteiligem Schwefel (Vulkanisation). Er soll mit Vorteil einen Reinheitsgrad von wenigstens 95 Gew.-% aufweisen (Aschegehalt < 0,5 Gew.-%). Ferner sollte der Schwefel weitgehend säurefrei sein, weil Säuren einen verzögernden Einfluß auf die Vulkanisation ausüben. Schwefelblüte, die meist Spuren von $SO_2$ enthält, ist daher weniger bevorzugt. Mit Vorteil wird Schwefel von mittlerer Feinheit (70 bis 80 Chancel-Grade) verwendet. Wesentlich für ein gutes Eigenschaftsprofil des Latex-Schaumgummi ist dessen gleichmäßige Verteilung im Latex-Schaum. Häufig wendet man deshalb den Schwefel in in wäßrigem Medium mittels Dispergatoren dispers verteilter Form an, deren Schwefelgehalt üblicherweise bei 40 bis 60 Gew.-% liegt. Günstig sind unter diesem Aspekt auch wäßrige Schwefelpasten. Bezogen auf die im Latexschaum einpolymerisiert enthaltene Menge an Butadien setzt man in der Regel 0,05 bis 3 Gew.-%, vorzugsweise 0,1 bis 2 Gew.-% Schwefel zu.

Wegen der Reaktionsträgheit des Schwefels und der zweiten olefinisch ungesättigten Gruppe des im Latexschaum einpolymerisiert enthaltenen Butadiens wendet man normalerweise den Schwefel zusammen mit Vulkanisationsbeschleunigern und Aktivatoren an.

Die wichtigsten Beschleuniger sind Thiazole (auch Mercaptobeschleuniger genannt) wie 2-Mercaptobenzothiazol, dessen Zinksalz und Dibenzothiazyldisulfid, Sulfenamide wie Benzothiazyl-2-cyclohexylsulfenamid, Benzothiazyl-2-tert.-butylsulfenamid, Benzothiazyl-2-sulfenmorpholid und Benzothazyl-dicyclo-hexylsulfenamid, Guanidine wie Diphenylguanidin, Di-ortho-tolylguanidin und ortho-Tolylbiguanidin, Thiurame wie Tetramethylthiuramdisulfid und Tetramethylthiuramdisulfid, Dithiocarbamate wie Zink-N-dimethyldithiocarbamat, Zink-N-diethyldithiocarbamat, Zink-N-dibutyldithiocarbamat, Zink-N-ethylphenyldithiocarbamat und Zink-N-pentamethylendithiocarbamat, Thioharnstoffe wie Ethylenthioharnstoff, Diethylenthioharnstoff und Diphenylthioharnstoff sowie Aldehyd-Amin-Kondensationsprodukte wie z.B. solche aus Butyraldehyd und Anilin. Vielfach werden auch Gemische von Vulkanisationsbeschleunigern angewendet. Bezogen auf die im Latexschaum einpolymerisiert enthaltene Menge an Butadien setzt man normalerweise 0,05 bis 4 Gew.-% an Vulkanisationsbeschleunigern zu.

Die meisten Vulkanisationsbeschleuniger benötigen zur Entfaltung ihrer optimalen Wirksamkeit sogenannte Aktivatoren wie Zinkoxid (Primäraktivator). Letzteres kann seinerseits durch Zusatz von Fettsäuren oder deren Salzen aktiviert werden (Sekundäraktivatoren). Bezogen auf die im Latexschaum einpolymerisiert enthaltene Menge an Butadien beträgt die Einsatzmenge an ZnO mit Vorteil 0,5 bis 5 Gew.-%. Fettsäuren und deren Salze wie z.B. Kaliumoleat und Kaliumdresinat wirken gleichzeitig als Schaumstabilisierungsmittel. Die angewandte Vulkanisationstemperatur liegt normalerweise bei 80 bis 150°C.

Die in der erfindungsgemäß verwendeten wäßrigen Polymerisatdispersion noch vorhandenen ungesättigten Gruppen, die durch ihre Reaktionsfähigkeit mit Schwefel einerseits die Vulkanisation ermöglichen, bedingen andererseits eine Empfindlichkeit des resultierenden Latex-Schaumgummi gegenüber reaktionsfähigen Substanzen wie z.B. Sauerstoff. Als Konsequenz dieser Wechselwirkung kann der Latex-Schaumgummi verhärten und verspröden (altern.) Vielfach setzt man daher dem Latexschaum noch Alterungsschutzmittel wie Wingstay®L zu.

Um eine möglichst homogene Verteilung der vorgenannten Hilfsmittel zu ermöglichen, erfolgt auch deren Zusatz vorzugsweise als 40 bis 60 gew.-%ige wäßrige Dispersion oder als wäßrige Paste.

Erfindungsgemäß bedarf es des Zusatzes eines Hydrats eines anorganischen Salzes, um den resultierenden Latex-Schaumgummi flammwidrig auszurüsten. Bevorzugt werden dabei Metalloxidhydrate, Metallhydroxide und deren Mischformen (Metalloxidhydroxide) angewendet. Mit Vorteil sind solche Hydrate eines anorganischen Salzes frei von Halogen, Phosphor, Arsen und Antimon. Beispielsweise kommen als solche Hydrate in Betracht Kaoline, Zinkborathydrate, Aluminiumoxidtrihydrat und Aluminiumtrihydroxid (z.B. Hydrargillit, Gibbsit, Bayerit oder Nordstrandit).

Weitere Hydrate anorganischer Salze finden sich in Angew. Chem. 173.Jahrg. 1961/Nr. 24, S. 785 bis 805. Bevorzugt werden solche Hydrate anorganischer Salze zugesetzt, deren Dehydratisierung bei Normaldruck (1 atm) ab einer Temperatur $\geq$ 200°C, bevorzugt im Bereich 200 bis 500°C, erfolgt. Bevorzugt angewandte Hydrate eines anorganischen Salzes sind solche, die frei von Schwermetallen sind, wie z.B. Aluminiumoxidtrihydrat ($Al_2O_3 \cdot 3H_2O$) oder $Al(OH)_3$.

Selbstverständlich werden die Hydrate der anorganischen Salze vorzugsweise in feinteiliger Form eingearbeitet. In der Regel beträgt der zahlenmittlere Großdurchmesser ihrer Körnung 0,1 bis 500 µm. Entsprechend feinteilige Aluminiumtrihydroxide sind z.B. als Martinale® bei der Martinswerk GmbH in Bergheim (DE) käuflich zu erwerben. Beispiele sind Martinal ON, Martinal OX, Martinal ON-313 und Martinal OL-104. Als besonders vorteilhaft eignet sich Martinal ON-313, dessen zahlenmittlerer Größtdurchmesser 10 bis 50 µm beträgt (vgl. "Martinal als flammhemmender Füllstoff in Kunstharzbeton und Kunstmarmor, 09/1983, Kz: 7/1", Martinswerk GmbH, Bergheim (DE)).

Weitere geeignete feinteilige Aluminiumtrihydroxide sind die Apyrale® (vgl. "Apyral as a Flame Retardant", VAW, 1988) der Vereinigte Aluminium Werke AG, Schwandorf, DE. Beispiele sind Apyral 60, Apyral 25, Apyral 30, Apyral 2 und Apyral 1. Die Wirkung der erfindungsgemäß zuzusetzenden feinteiligen Hydrate anorganischer Salze auf die physikalisch-mechanischen Eigenschaften des erfindungsgemäßen Latex-Schaumgummi entspricht im wesentlichen derjenigen von Füllstoffen.

Normalerweise enthält Latex-Schaumgummi maximal bis zu 30 %, im allgemeinen sogar nur 20 % seines Gewichtes an Füllstoffen, um seine physikalischen Eigenschaften nicht zu beeinträchtigen (vgl. z.B. Dispersionen synthetischer Hochpolymerer, Teil II, H. Reinhard, Springer-Verlag, Berlin (1969), S. 229, zweitletzter Abschnitt).

Es überrascht daher, daß erfindungsgemäß, bezogen auf das erfindungsgemäß verwendete Polymerisat, 35 bis 55 Gew.-%, vorzugsweise 40 bis 50 Gew.-%, an feinteiligem Hydrat eines anorganischen Salzes zugesetzt werden können, ohne daß das erforderliche mechanische Eigenschaftsprofil des Latex-Schaumgummi (Massendichte nach ISO 845: 80 bis 200 kg/m$^3$, Reißdehnung nach ISO 1798: $\geq$180 %, Reißkraft nach ISO 1798:$\geq$70 kPa, sowie Eindruckhärte nach ISO 2439,A: $\leq$350 N, jeweils auf 23°C und 1 atm bezogen) verlassen wird. Es überrascht ferner, daß durch einen solchen alleinigen Zusatz an feinteiligem Hydrat eines anorganischen Salzes (d.h. ohne Zusatz weiterer Flammschutzmittel) bereits eine normengerechte Flammwidrigkeit des erfindungsgemäßen Schaumgummi erzielt werden kann. Wird als solches feinteiliges Hydrat eines anorganischen Salzes $Al_2O_3 \cdot 3H_2O$ oder $Al(OH)_3$ verwendet, ist insbesondere erstmals ein Latex-Schaumgummi zugänglich, der frei von Halogen, frei von Phosphor und frei von Schwermetallen (alle Metalle deren Atomgewicht oberhalb des Ca liegt, ausgenommen Zn) einerseits eine normengerechte Flammfestigkeit aufweist und andererseits hinsichtlich seiner physikalisch-mechanischen Eigenschaften in vollem Umfang zu befriedigen vermag. Neben den erfindungsgemäß zuzusetzenden feinteiligen Hydraten eines anorganischen Salzes können die erfindungsgemäßen Latex-Schaumgummi, bezogen auf das erfindungsgemäße Polymerisat, noch bis zu 20 Gew.-% sonstiger an sich üblicher feinteiliger Füllstoffe wie z.B. Kreide enthalten.

Im einzelnen wird die Herstellung von Latex-Schaumgummi, ausgehend von der erfindungsgemäß verwendeten wäßrigen Polymerisatdispersion, üblicherweise in mehreren Verfahrensabschnitten vollzogen.

Zuerst werden normalerweise die zur Vulkanisation erforderlichen Chemikalien (Kolloidschwefel und Vulkanisationsbeschleuniger), Antioxidantien, Schaumstabilisierungsmittel und gegebenenfalls weitere Hilfsmittel mit der wäßrigen erfindungsgemäßen Polymerisatdispersion gemischt. In der Regel nach einer bestimmten Reifezeit, die, gegebenenfalls unter schwachem Rühren der Mischung, bis zu 3 Tagen dauern kann, wird die konfektionierte wäßrige Polymerisatdispersion auf den gewünschten Verschäumungsgrad (in der Regel das 8- bis 12-fache Volumen der Ausgangsmischung) gebracht. Dies kann z.B. durch Zusatz von Gase freisetzenden Verbindungen erfolgen (Wasserstoffperoxid, Natriumperborat oder niedrigsiedende Lösungsmittel). In einfacher Weise erfolgt es jedoch zweckmäßig durch Einschlagen von Luft mittels eines Schlagschäumers. Normalerweise werden die gegebenenfalls mit zu verwendenden anorganischen Füllstoffe sowie die erfindungsgemäß zuzusetzenden feinteiligen Hydrate anorganischer Salze zuvor oder zur selben Zeit zugesetzt.

Als eigentlich kennzeichnendes Merkmal des Dunlop-Prozesses (z.B. GB-326210 und US-1 852 447) wird in den fertigen Latex-Schaum das Gelierungsmittel, bevorzugt feinteiliges Natrium- und/oder Kaliumhexafluorosilicat, zugesetzt. Die Wirksamkeit der Hexafluorosilicate beruht auf der langsamen Hydrolyse gemäß

$$Na_2SiF_6 + 4H_2O \rightarrow 2NaF + 4HF + Si(OH)_4.$$

D.h., die Gelierung erfolgt auf Kosten der Fluorwasserstoffbildung, die den pH-Wert des Schaumes herabsetzt. Außerdem adsorbiert die gebildete Kieselsäure an ihrer großen Oberfläche die Dispergiermittel und vermindert so zusätzlich die Stabilität des Latexschaumes. Die Einarbeitung des Geliermittels in den Schaum erfolgt zweckmäßig innerhalb weniger Minuten. Anschließend wird der Latex-Schaum beim Dunlop-Verfahren in z.B. eine metallische Form gefüllt. In selbiger erfolgt in typischer Weise unter Normalbedingungen oder bei erhöhter Temperatur durch sich selbst Überlassen die Gelierung. Die Vulkanisation kann im Anschluß an die Gelierung z.B. durch Einwirkung von erhitztem Wasserdampf erfolgen. Selbstverständlich können Gelierung und Vulkanisation auch überlappen. Danach wird in der Regel der noch heiße Schaumgummi aus der Form entnommen, gewaschen und getrocknet.

Dabei gilt als Faustregel, daß ein langsameres Gelieren die resultierende Flammschutzwidrigkeit verbessert, was sich insbesondere bei geringen Zusätzen an Hydraten anorganischer Salze bemerkbar macht (insbesondere der Test gemäß DIN EN 597, Teil 1, mit und ohne Textilauflage (normalerweise flame retardant polyester) wird besser bestanden).

Beim Dunlop-Prozess werden Gelierzeiten von $\geq$ 10 min bis $\leq$ 1 h, vorzugsweise $\leq$ 30 min, empfohlen. Dies gilt insbesondere bei Verwendung der wäßrigen Polymerisatdispersion A gemäß den Ausführungsbeispielen. Unterhalb von 10 min liegende Gelierzeiten sind in diesem Fall weniger empfehlenswert.

Als Einflußmöglichkeiten auf die Gelierzeit bieten sich dabei an:

a) die eingesetzte Menge an Geliermittel; mit zunehmender Menge an eingesetztem Geliermittel nimmt die Gelierzeit normalerweise ab;

b) die zur Stabilisierung der wäßrigen Ausgangspolymerisatdispersion eingesetzte Menge an Dispergiermittel (insbesondere die Menge an Alkali- und/oder Ammoniumsalzen von $C_8$- bis $C_{18}$-Fettsäuren); mit zunehmender Menge an Dispergiermittel nimmt die Gelierzeit normalerweise zu;

c) die beim Gelieren herrschende Temperatur; eine erhöhte Temperatur bedingt in der Regel eine beschleunigte Gelierung, insbesondere bei Verwendung von $Na_2SiF_6$ als Geliermittel.

Das Talalay-Verfahren (vgl. z.B. US 2 432 353) unterscheidet sich vom Dunlop-Prozeß im wesentlichen durch die Art, in der die Gelierung durchgeführt wird. Normalerweise wird mit dem noch kein Gelierungsmittel zugesetzt enthaltenden Latexschaum eine Form teilgefüllt. Durch Anlegen eines Vakuums expandiert die vorgeschäumte Masse weiter, bis zur vollständigen Ausfüllung der vorgegebenen Form. Dann wird der Schaum durch Abkühlen der Form (in typischer Weise auf ca. -30°C) eingefroren. Anschließend wird das Vakuum durch Einströmen von $CO_2$ gebrochen. Damit einhergehend taut das System. Gleichzeitig bewirkt das saure $CO_2$ die Gelierung. Im Anschluß daran wird in an sich bekannter Weise vulkanisiert.

Während nach dem Dunlop-Verfahren Schaumgummi vorwiegend in Form von Platten und Blöcken (z.B. Matratzen) hergestellt wird, werden nach dem Talalay-Verfahren vorwiegend Schaumgummiblöcke erzeugt. Beide Verfahrensweisen sind dem Fachmann ausgehend von der Butadien/Styrol-Latex-Schaumgummiherstellung hinreichend bekannt.

Mit besonderem Vorteil wird das Verfahren zur Herstellung von Schaumgummikissen und Schaumgummimatratzen sowie von Polstermaterial in der Automobil- und Möbelindustrie angewandt. Selbstverständlich eignet sich der erfindungsgemäße Latex-Schaumgummi auch zum Zweck der Teppichrückenbeschichtung.

Erfindungsgemäßer Gegenstand ist daher insbesondere Latex-Schaumgummi,

i) der keine (< 2 Gew.-% bezogen auf das Schaumgummi) phosphorhaltige organische Verbindung (im Grenzfall überhaupt keinen Phosphor), keine halogenierte organische Verbindung (im Grenzfall überhaupt kein Halogenid), kein As und kein Sb aufweist,
ii) dessen Polymerisat, in radikalisch polymerisierter Form aus

a) wenigstens 50 Gew.-% wenigstens eines Monomeren aus der Gruppe umfassend Butadien und Isopren (Monomere a),

b) wenigstens 10 Gew.-% wenigstens eines Monomeren aus der Gruppe umfassend Ester aus Acrylsäure oder Methacrylsäure und einem 1 bis 8 C-Atome aufweisenden Alkanol (Monomere b) und

c) 0 bis 10 Gew.-% sonstigen radikalisch copolymerisierbaren, wenigstens eine ethylenisch ungesättigte Gruppe aufweisenden, Monomeren (Monomere c)

mit der Maßgabe aufgebaut ist, daß die Gesamtmenge der in radikalisch polymerisierten Form einpolymerisiert enthaltenen Monomeren a) und b) wenigstens 90 Gew.-% beträgt, wobei die Angaben in Gew.-% jeweils auf die Gesamtmenge der das Polymerisat in radikalisch polymerisierter Form konstituierender Monomeren a) + b) + c) bezogen sind,

iii) der, bezogen auf die Masse des vorgenannten Polymerisats, 35 bis 55 Gew.-% eines feinteiligen Hydrats eines anorganischen Salzes enthält und

iiii) der bei 1 atm und 23°C die nachfolgenden physikalischen Kenndaten aufweist

- Massendichte: 80 bis 200 kg/m$^3$,
- Reißdehnung nach ISO 1798: $\geq$ 180 %,
- Reißkraft nach ISO 1798: $\geq$ 70 kPa und
- Eindruckhärte nach ISO 2439, A: $\leq$350 N.

Überraschend an solchermaßen konfektioniertem Latex-Schaumgummi ist dessen nach DIN EN 597, Teil 1 und Teil 2, Entwurf vom Februar 1992, reduzierte Entzündbarkeit sowie seine verminderte Neigung zu Rauchentwicklung.

Erfindungsgemäß besonders vorteilhaft ist, daß vorgenannter Latex-Schaumgummi auch frei (< 1 Gew.-% auf das Schaumgummi bezogen) von Schwermetallen realisierbar ist.

Beispiele

a) Herstellung einer wäßrigen Polymerisatdispersion A

In einem gerührten Polymerisationsdruckgefäß mit einem Innenvolumen von 160 l wurde bei 20°C eine Lösung aus 0,18 kg $K_2SO_4$, 0,11 kg $Na_2SO_4$, 0,007 kg des Na-Salzes der Ethylendiamintetraessigsäure, 0,007 kg Natriumdithionit, 0,17 kg eines Polykondensats aus Naphthalinsulfonsäure und Formaldehyd mit einem zahlenmittleren Molekulargewicht von 5000 in Form einer 45 gew.-%igen wäßrigen Lösung, 7,9 kg Kaliumoleat in Form einer 12,5 gew.-%igen wäßrigen Lösung und 9,0 kg Wasser vorgelegt und anschließend wurden 46,8 kg Wasser zugefügt.

Daraufhin wurden die nachfolgenden Bestandteile eines Redoxinitiatorsystems zugesetzt: 0,007 kg Natriumthionit, 0,007 kg Natriumformaldehydsulfoxylat, 0,003 kg $Fe(II)SO_4 \cdot 7H_2O$, 0,007 kg Na-Salz der Ethylendiamintetraessigsäure, 0,013 kg Natriumphosphat ($Na_3PO_4 \cdot 10H_2O$) und 2,5 kg Wasser. Dann wurden 11,5 kg Methylmethacrylat und 0,03 kg tert.-Dodecylmercaptan eingerührt. Schließlich wurden dem Polymerisationsgefäß 21,4 kg Butadien zugedrückt.

Das resultierende Gemisch wurde auf 10°C gekühlt. Dann wurden 0,05 kg Para-Menthanhydroperoxid auf einmal zugesetzt und dadurch die Polymerisation ausgelöst. Unter Aufrechterhaltung der Polymerisationstemperatur von 10°C wurde bis zu einem, auf die Gesamtmenge der zu polymerisierenden Monomeren bezogenen, Polymerisationsumsatz von 35 Gew.-% weiterpolymerisiert. Dann wurden auf einmal nochmals 1,3 kg Kaliumoleat (als 12,5 gew.-%ige wäßrige Lösung) und 0,02 kg Para-Menthanhydroperoxid auf einmal zugesetzt. Danach wurde bis zu einem Polymerisationsumsatz von 50 Gew.-% unter Aufrechterhaltung der 10°C die Polymerisation fortgeführt. Daraufhin wurde die Polymerisationstemperatur auf 15°C erhöht und bei dieser Temperatur bis zu einem Umsatz von 60 Gew.-% weiterpolymerisiert. Dann wurde die Polymerisationstemperatur auf 20°C erhöht und die Polymerisation unter Aufrechterhaltung dieser Temperatur bis zu einem Polymerisationsumsatz von >98 Gew.-% und $\leq$99 Gew.-% fortgeführt. Schließlich wurde die radikalische wäßrige Emulsionspolymerisation durch Zusatz von 0,012 kg Di-ethylhydroxylamin gestoppt. Daran anschließend wurde durch Zusatz von 1,7 kg Kaliumoleat (als 12,5 gew.-%ige wäßrige Lösung) nachstabilisiert. Schließlich wurden die Restmonomeren durch Strippen mit Wasserdampf entfernt.

Es wurde eine wäßrige Polymerisatdispersion erhalten, die einen Feststoffgehalt von 33 Gew.-% aufwies. Untersuchungen mittels der analytischen Ultrazentrifuge wiesen die dispergierten Polymerisatpartikel als chemisch einheitlich aus. Die ermittelte Teilchendichte entspricht einer Polymerisatzusammensetzung von 65 Gew.-% Butadien und 35 Gew.-% Methylmethacrylat. Der gewichtsmittlere Teilchendurchmesser der monomodalen wäßrigen Polymerisatdispersion betrug 70 nm.

Die so erhaltene wäßrige Ausgangspolymerisatdispersion wurde bei 20°C einer Druckagglomeration unterworfen (Gerät: Homogenisator der Firma APV Gaulin vom Typ MC 45-5TBAX, Druck: 320 bar).

Die druckagglomerierte wäßrige Polymerisatdispersion wurde mittels eines Dünnschichtverdampfers auf eine Polymerisatvolumenkonzentration von 60 Vol.-% aufkonzentriert (die Manteltemperatur des Dünnschichtverdampfers variierte von 100 bis 130°C). Der Druck im Verdampfer variierte von 80 bis 120 mbar. Die zugehörige Latextemperatur war 40 bis 50°C.

Die Teilchendurchmesserverteilungsfunktion (Häufigkeitsverteilung) der so resultierenden wäßrigen Polymerisatdispersion A wies zwei Maxima auf. Das erste Maximum lag bei einem Durchmesser von 70 nm, das zweite lag bei einem Durchmesser von 580 nm. Die Halbwertsbreite des ersten Maximum betrug 40 nm und die Halbwertsbreite des zweiten Maximum betrug 1000 nm. Der gewichtsmittlere Polymerisatteilchendurchmesser betrug 148 nm und der zahlenmittlere Durchmesser betrug 76 nm.

Die Größe $\tan \delta_{max}$ wurde zu 0,3 ermittelt und der ungelöste Anteil des dispergierten Polymerisats betrug 65 Gew.-%. Es sei an dieser Stelle festgehalten, daß anstelle der Drukkagglomeration auch z.B. eine chemische Agglomerisation wie folgt aufgewendet werden kann: 9 kg der zu agglomerierenden wäßrigen Ausgangsdispersion werden auf 50°C erwärmt. Dann werden 0,002 kg eines modifizierten Polyethylenglykols (Carbowax® 20 M) und 0,05 kg eines Polykondensats aus Naphthalinsulfonsäure und Formaldehyd (zahlenmittleres Molekulargewicht = 5000) zugesetzt (entsprechende Mengen einer 10 gew.-%igen wäßrigen Carbowax-Lösung und einer 45 gew.-%igen wäßrigen Polykondensatlösung werden zu einer insgesamt 25 gew.-%igen wäßrigen Lösung gemischt, die dann zugesetzt wird). Die resultierende Mischung wird 30 min bei 50°C gerührt und anschließend auf 25°C abgekühlt. Während des Abkühlens wird 0,26 kg Kaliumoleat als 12,5 gew.-%ige wäßrige Lösung zugesetzt.

b) Herstellung einer wäßrigen Butadien/Styrol-Vergleichsdispersion B

Die Herstellung der wäßrigen Vergleichsdispersion B erfolgte in Anlehnung an a) unter Einstellung eines vergleichbaren Vernetzungsgrades. Der wesentliche Verfahrensunterschied lag darin begründet, daß anstelle von Methylmethacrylat eine äquimolare Menge Styrol eingesetzt wurde. In entsprechender Weise konnte die Mitverwendung des Naphthalin-Formaldehyd-Schutzkolloids entfallen. Statt dessen enthielt die Vorlage 3,8 kg Kaliumoleat und die bei einem Polymerisationsumsatz von 35 Gew.-% zugesetzte Menge Kaliumoleat betrug 0,75 kg.

c) Herstellung von Latex-Schaumgummi aus den wäßrigen Polymerisatdispersionen A und B

In jeweils 1240 g der eine Polymerisatvolumenkonzentration von 60 Vol-% aufweisenden wäßrigen Polymerisatdispersion wurden nacheinander eingerührt:

| | |
|---|---|
| 64 g | Kaliumoleat als 12,5 gew.-%ige wäßrige Lösung, |
| 16 g | Kaliumdresinat als 25 gew.-%ige wäßrige Lösung, |
| 0 g | oder 320 g Al(OH)$_3$ (Martinal ON 313 = ATH), |
| 28 g | Schwefel als 50 gew.-%ige wäßrige Suspension, |
| 16 g | Zinkethylphenyldithiocarbamat als 50 gew.-%ige wäßrige Suspension und |
| 12 g | Diphenylguanidin als 50 gew.-%ige wäßrige Suspension, |
| 16 g | Wingstay L als 50 gew.-%ige wäßrige Suspension und |
| 48 g | feinteiliges ZnO als 50 gew.-%ige wäßrige Suspension. |

Das resultierende Gemisch wurde mittels eines Schlagschäumers auf das 8 bis 10-fache seines Volumens aufgeschäumt. In den resultierenden Schaum wurden 112 g $Na_2SiF_6$ (als 25 gew.-%ige wäßrige Suspension) innerhalb von 2 min eingearbeitet.

Anschließend wurde die aufgeschlagene Masse in eine Metallform gefüllt (450 mm x 350 mm x 50 mm) und der überschüssige Schaum glatt abgestrichen. Nach erfolgter Gelierung durch sich selbst überlassen (10 min) bei Raumtemperatur wurde in einem mittels 100°C heißem Wasserdampf beheizten Vulkanisationsofen vulkanisiert (30 min). Danach wurde der resultierende Schaumgummi der Form entnommen, gewaschen und getrocknet und gemäß der DIN EN 597 (Entwurf vom Februar 1992, Teil 1 und Teil 2) konditioniert.

Anschließend wurden gemäß der DIN EN 597 Teil 1 und Teil 2 die Entzündbarkeit des jeweils erhaltenen Schaumgummis untersucht sowie seine physikalisch-mechanischen Eigenschaften bestimmt (23°C, 1 atm). Die erhaltenen Ergebnisse zeigte die nachfolgende Tabelle.

Tabelle

|  | Massendichte nach ISO 845 $(kg/m^3)$ | Reißkraft nach ISO 1798 (kPa) | Reißdehnung nach ISO 1798 (%) | Eindruckhärte nach ISO 2439 A (40% Eindrückung, N) | Entzündbarkeit | |
|---|---|---|---|---|---|---|
|  |  |  |  |  | Teil 1 | Teil 2 |
| Latex A (ohne ATH) | 100 | 80 | 240 | 270 | ja | ja |
| Latex A (mit ATH) | 140 | 95 | 230 | 300 | nein | nein |
| Latex B (ohne ATH) | 100 | 100 | 230 | 280 | ja | ja |
| Latex B (mit ATH) | 135 | 100 | 200 | 340 | ja | ja |

Der Druckverformungsrest nach ISO 1856 betrug in allen Fällen 5 bis 10 %.

Bei Verwendung des Latex B mußte die zugesetzte ATH-Menge auf 800 g erhöht werden um eine Entzündbarkeit gemäß DIN EN 597, Teil 1 und 2 zu vermeiden.

Die physikalisch-mechanischen Eigenschaften des resultierenden Schaumgummi waren unter diesen Bedingungen:

$$170 \text{ kg/m}^3 \qquad 50 \text{ kPa} \qquad 150 \text{ \%} \qquad 480 \text{ N}$$

Der Druckverformungsrest lag bei 8 %. Ein solcher Latex-Schaumgummi ist aufgrund seiner physikalisch-mechanischen Beschaffenheit z.B. nicht mehr zur Herstellung einer Matratze geeignet.

**Patentansprüche**

1. Latex-Schaumgummi, dessen Polymerisat in radikalisch polymerisierter Form aus

   a) wenigstens 50 Gew.-% wenigstens eines Monomeren aus der Gruppe umfassend Butadien und Isopren (Monomere a),

   b) wenigstens 10 Gew.-% wenigstens eines Monomeren aus der Gruppe umfassend Ester aus Acrylsäure oder Methacrylsäure und einem 1 bis 8 C-Atome aufweisenden Alkanol (Monomere b) und

   c) 0 bis 10 Gew.-% sonstigen radikalisch copolymerisierbaren, wenigstens eine ethylenisch ungesättigte Gruppe aufweisenden, Monomeren (Monomere c)

   mit der Maßgabe aufgebaut ist, daß die Gesamtmenge der in radikalisch polymerisierter Form einpolymerisiert enthaltenen Monomeren a) und b) wenigstens 90 Gew.-% beträgt, wobei die Angaben in Gew.-% auf die Gesamtmenge der in das Polymerisat einpolymerisierten Monomeren a)+b)+c) bezogen sind und der, bezogen auf das Gewicht des Polymerisats, 35 bis 55 Gew.-% wenigstens eines Hydrats eines anorganischen Salzes enthält.

2. Latex-Schaumgummi nach Anspruch 1, dadurch gekennzeichnet, daß das wenigstens eine Hydrat eines anorganischen Salzes $Al_2O_3 \cdot 3H_2O$ und/oder $Al(OH)_3$ umfaßt.

3. Latex-Schaumgummi nach Anspruch 1, dadurch gekennzeichnet, daß das wenigstens eine Hydrat eines anorganischen Salzes aus $Al_2O_3 \cdot 3H_2O$ und/oder $Al(OH)_3$ besteht.

4. Latex-Schaumgummi nach Anspruch 1 bis 3, dadurch gekennzeichnet, daß er bei 1 atm und 23°C die nachfolgenden physikalischen Kenndaten aufweist:

   - Massendichte nach ISO 845: 80 bis 200 kg/m$^3$,
   - Reißdehnung nach ISO 1798: $\geq$ 180 %,
   - Reißkraft nach ISO 1798: $\geq$ 70 kPa und
   - Eindruckhärte nach ISO 2439, A: $\leq$ 350 N.

5. Verwendung von Latex-Schaumgummi gemäß Anspruch 1 bis 4 zur Herstellung von Matratzen, Kissen und Polstermaterial.

6. Matratzen, Kissen und Polstermaterial enthaltend einen Latex-Schaumgummi gemäß Anspruch 1 bis 5.

7. Wäßriger Latex-Schaum, dessen Latex eine wäßrige Polymerisatdispersion ist, deren in disperser Verteilung befindliches Polymerisat in radikalisch polymerisierter Form aus

   a) wenigstens 50 Gew.-% wenigstens eines Monomeren aus der Gruppe umfassend Butadien und Isopren (Monomere a),

   b) wenigstens 10 Gew.-% wenigstens eines Monomeren aus der Gruppe umfassend Ester aus Acrylsäure oder Methacrylsäure und einem 1 bis 8 C-Atome aufweisenden Alkanol (Monomere b) und

   c) 0 bis 10 Gew.-% sonstigen radikalisch copolymerisierbaren, wenigstens eine ethylenisch ungesättigte Gruppe aufweisenden, Monomeren (Monomere c)

   mit der Maßgabe aufgebaut ist, daß die Gesamtmenge der in radikalisch polymerisierter Form einpolymerisiert enthaltenen Monomeren a) und b) wenigstens 90 Gew.-% beträgt, wobei die Angaben in Gew.-% auf die Gesamtmenge der in das Polymerisat einpolymerisierten Monomeren a)+b)+c) bezogen sind und der, bezogen auf die Menge des enthaltenen Polymerisats, 35 bis 55 Gew.-% eines Hydrats eines anorganischen Salzes enthält.

**Claims**

1. A latex foam rubber whose polymer is in free-radically polymerized form and is built up of

a) at least 50% by weight of at least one monomer selected from the group consisting of butadiene and isoprene (monomers a),

b) at least 10% by weight of at least one monomer selected from the group consisting of esters of acrylic acid or methacrylic acid and an alkanol having from 1 to 8 carbon atoms (monomers b) and

c) from 0 to 10% by weight of other free-radically copolymerizable monomers containing at least one ethylenically unsaturated group (monomers c),

with the proviso that the total amount of the monomers a) and b) which are polymerized in in free-radically polymerized form is at least 90% by weight, with the percentages by weight being based on the total amount of the monomers a) + b) + c) which are polymerized into the polymer and which comprises, based on the weight of the polymer, from 35 to 55% by weight of at least one hydrate of an inorganic salt.

2. A latex foam rubber as claimed in claim 1, wherein the hydrate of an inorganic salt, of which there is at least one, comprises $Al_2O_3 \cdot 3H_2O$ and/or $Al(OH)_3$.

3. A latex foam rubber as claimed in claim 1, wherein the hydrate of an inorganic salt, of which there is at least one, consists of $Al_2O_3 \cdot 3H_2O$ and/or $Al(OH)_3$.

4. A latex foam rubber as claimed in any of claims 1 to 3, which at 1 atm and 23°C has the following physical properties:

- density by mass in accordance with ISO 845: from 80 to 200 kg/m$^3$,
- elongation at break in accordance with ISO 1798: ≥ 180%,
- tensile strength in accordance with ISO 1798: ≥ 70 kPa and
- indentation hardness in accordance with ISO 2439, A: ≤ 350 N.

5. Use of latex foam rubber as claimed in any of claims 1 to 4 for producing mattresses, cushions and upholstery material.

6. A mattress, cushion or upholstery material comprising a latex foam rubber as claimed in any of claims 1 to 5.

7. An aqueous latex foam whose latex is an aqueous polymer dispersion whose dispersed polymer is in free-radically polymerized form and is built up of

a) at least 50% by weight of at least one monomer selected from the group consisting of butadiene and isoprene (monomers a),

b) at least 10% by weight of at least one monomer selected from the group consisting of esters of acrylic acid or methacrylic acid and an alkanol having from 1 to 8 carbon atoms (monomers b) and

c) from 0 to 10% by weight of other free-radically copolymerizable monomers containing at least one ethylenically unsaturated group (monomers c),

with the proviso that the total amount of the monomers a) and b) which are polymerized in in free-radically polymerized form is at least 90% by weight, with the percentages by weight being based on the total amount of the monomers a) + b) + c) which are polymerized into the polymer and which, based on the amount of polymer present, contains from 35 to 55% by weight of a hydrate of an inorganic salt.

**Revendications**

1. Caoutchouc en mousse de latex dont le polymère est construit, sous forme polymérisée de façon radicalaire, à partir de

a) au moins 50% en poids d'au moins un monomère choisi dans le groupe comprenant le butadiène et l'isoprène (monomères a),
b) au moins 10% en poids d'au moins un monomère choisi dans le groupe comprenant les esters d'acide acrylique ou d'acide méthacrylique et d'un alcanol ayant 1 à 8 atomes de carbone (monomères b), et
c) 0 à 10% en poids d'autres monomères copolymérisables de façon radicalaire, comportant au moins un groupement à insaturation éthylénique (monomères c),

étant spécifié que la quantité totale des monomères a) et b) contenus en liaison polymère sous forme polymérisée de façon radicalaire s'élève à au moins 90% en poids, où les indications en % en poids se rapportent à la quantité totale des monomères a) + b) + c) en liaison polymère dans le polymère, et qui contient 35 à 55% en poids d'au moins un hydrate d'un sel inorganique, par rapport au poids du polymère.

2. Caoutchouc en mousse de latex selon la revendication 1, caractérisé en ce que l'au moins un hydrate d'un sel inorganique comprend $Al_2O_3.3H_2O$ et/ou $Al(OH)_3$.

3. Caoutchouc en mousse de latex selon la revendication 1, caractérisé en ce que l'au moins un hydrate d'un sel inorganique est constitué de $Al_2O_3.3H_2O$ et/ou de $Al(OH)_3$.

4. Caoutchouc en mousse de latex selon l'une quelconque des revendications 1 à 3, caractérisé en ce qu'il présente les caractéristiques physiques suivantes sous 1 atm et à 23°C :

   - masse volumique selon ISO 845 : 80 à 200 kg/m$^3$,
   - élongation à la rupture selon ISO 1798 : ≥ 180%,
   - résistance à la rupture selon ISO 1798 : ≥ 70 kPa et
   - dureté à la pénétration selon ISO 2439, A : ≤ 350 N.

5. Utilisation de caoutchouc en mousse de latex selon l'une quelconque des revendications 1 à 4, pour la fabrication de matelas, de coussins et de matières de rembourrage.

6. Matelas, coussins et matières de rembourrage, contenant un caoutchouc en mousse de latex selon l'une quelconque des revendications 1 à 5.

7. Mousse de latex aqueuse, dont le latex est une dispersion aqueuse de polymère, et dont le polymère se trouvant en une répartition dispersée est construit sous forme polymérisée de façon radicalaire, à partir de

   a) au moins 50% en poids d'au moins un monomère choisi dans le groupe comprenant le butadiène et l'isoprène (monomères a),
   b) au moins 10% en poids d'au moins un monomère choisi dans le groupe comprenant les esters d'acide acrylique ou d'acide méthacrylique et d'un alcanol ayant 1 à 8 atomes de carbone (monomères b), et
   c) 0 à 10% en poids d'autres monomères copolymérisables de façon radicalaire, comportant au moins un groupement à insaturation éthylénique (monomères c),

étant spécifié que la quantité totale des monomères a) et b) contenus en liaison polymère sous forme polymérisée de façon radicalaire s'élève à au moins 90% en poids, où les indications en % en poids se rapportent à la quantité totale des monomères a) + b) + c) en liaison polymère dans le polymère, et qui contient 35 à 55% en poids d'un hydrate d'un sel inorganique, par rapport à la quantité de polymère contenu.